# EUROPEAN PATENT SPECIFICATION

(11) **EP 4 328 097 B1**
(45) Date of publication and mention of the grant of the patent: **01.04.2026**
(21) Application number: 22791763.0
(22) Date of filing: 20.04.2022
(51) Int. Cl.: B60R 21/233, B60N 2/42, B60R 21/207, B60R 21/231, B60R 21/2338

(54) **A VEHICLE SEAT COMPRISING A SIDE AIRBAG DEVICE**
EIN FAHRZEUGSITZ MIT EINER SEITENAIRBAGVORRICHTUNG
UN SIÈGE DE VÉHICULE AVEC UN DISPOSITIF DE SÉCURITÉ GONFLABLE LATÉRAL

(30) Priority: 21.04.2021 JP 2021071526
(43) Date of publication of application: 28.02.2024
(73) Proprietor: Autoliv Development AB, 44783 Vargarda (SE)
(72) Inventor: KOBAYASHI, Yuto, Yokohama-shi, Kanagawa 222-8580 (JP); SAKURAI, Tsutomu, Yokohama-shi, Kanagawa 222-8580 (JP)
(74) Representative: Müller Verweyen
(86) International application number: PCT/JP2022/018303
(87) International publication number: WO 2022/224992

(56) References cited:
- WO-A1-2019/110705
- WO-A1-2020/036048
- WO-A1-2020/255817
- JP-A- 2006 008 105
- JP-A- 2006 008 105
- JP-A- 2010 076 640
- JP-A- 2013 147 041
- JP-A- 2016 007 902
- JP-A- 2019 031 220
- JP-A- 2019 034 710
- JP-A- 2021 066 426
- KR-A- 20170 051 824
- KR-A- 20200 141 727
- US-A1- 2015 061 267
- US-A1- 2019 161 052

## Description

### TECHNICAL FIELD

The present invention relates to a side airbag device provided with a bag-shaped cushion that expands and deploys to a side of the occupant in a vehicle seat in the event of a vehicle side impact or the like.

### BACKGROUND ART

Airbag devices have generally become standard equipment in vehicles in recent years. An airbag device is a safety device that is operated in the event of an emergency such as a vehicle collision or the like to receive and protect an occupant by expanding and deploying a cushion based on gas pressure. As an example, a side airbag device is provided with a bag-shaped cushion that expands and deploys to a side of the occupant in a vehicle seat in the event of a vehicle side impact or the like.

Normally, when a vehicle receives an impact in a lateral direction, the occupant moves in a vehicle width direction. For example, in the event of a side impact in which an object such as another vehicle, a utility pole, or the like (impact object) impacts a front passenger seat side door, there are two main types of side airbags that protect an occupant. The first is a so-called near side airbag. The near side airbag expands and deploys between the occupant seat and the side door and prevents an occupant on an impact object contact side (occupant on near side; occupant in occupant seat in this case) from impact with the side door. The second is the so-called far side airbag (for example Patent Document 1). The far side airbag expands and deploys between the driver seat and the occupant seat and protects an occupant moving to the center of the vehicle due to impact from the lateral direction (far side occupant; occupant in driver seat in this case).

Patent Document 1 describes a vehicle safety device with a far side airbag and a tension tether connected to the far side airbag. The tension tether is connected to the seat back frame at both ends in the longitudinal direction, and in the expanded and deployed state of the far side airbag, extends upward from the portion of the upper end of the seat back frame that is outside the vehicle from the headrest and further hooks onto the headrest from the rear side of the seat. Furthermore, the tension tether extends from the upper surface of the headrest to the upper surface of the far side airbag and then through the vehicle inner side of the far side airbag to the seatback frame.

According to Patent Document 1, the tension tether supports the far side airbag from the inner side in the vehicle width direction, and the tension tether can prevent contact between the occupant and the tension tether when the far side airbag expands and deploys, thereby stabilizing the direction of deployment of the far side airbag.

### RELATED ART DOCUMENTS

### PATENT DOCUMENTS

Patent Document 1: Japanese Unexamined Patent Application 2014-51138 Patent document 2: JP 2006 008105 A discloses a vehicle seat according to the preamble of claim 1.

### SUMMARY OF THE INVENTION

### PROBLEM TO BE SOLVED BY THE INVENTION

In the vehicle safety device of Patent Document 1, the tension tether must support the far side airbag from the inner side in the vehicle width direction; furthermore, the tension tether must prevent contact between the occupant and the tension tether when the far side airbag expands and deploys. This restricts the mounting position of the tension tether and makes the installation work time-consuming. If the tension tether is displaced from its designated position during the deployment of the far side airbag, stabilizing the direction of deployment of the far side airbag will be difficult.

In view of these problems, the object of the present invention is to provide a vehicle seat with a side airbag device according to claim that can improve the protection performance of the occupant.

### MEANS FOR SOLVING THE PROBLEM

In order to solve the above problem, a typical configuration of a vehicle seat is defined by claim 1.

In the above configuration, when the cushion is expanded and deployed, the main chamber expands toward the side of the occupant in the vehicle seat, and the sub-chamber protrudes toward the occupant of the vehicle seat to receive the head of the occupant. In the further expanded and deployed cushion, the panels connecting the main and sub-chambers are pulled away from the main and sub-chambers to form a plane between the main and sub-chambers. This allows the panel to support the sub-chamber during cushion expansion and deployment.

Therefore, according to the above configuration, when the head of the occupant moves downward in the vehicle during a collision, not only is the head received by the sub-chamber, but the panel supports the sub-chamber, thereby preventing the head of the occupant from moving downward. When the head of the occupant moves toward the front of the vehicle during a collision, the panel that forms a plane receives the head of the occupant. Thus, according to the above configuration, the protection performance of the occupant can be improved.

The panel described above is a panel having at least three sides, connected to a first location in the main chamber above the lower end part of the sub-chamber, a second location on the occupant side of the front end of the sub-chamber, and a third location in the main chamber in front of or near the lower end part of the sub-chamber.

This causes the panels connecting the main and sub-chambers to be pulled from the first and third locations positioned in the main chamber and the second location in the sub-chamber in the expanded and deployed cushion. This allows the panel to more reliably form a plane between the main and sub-chambers during cushion expansion and deployment to support the sub-chamber and also to receive the head of the occupant.

The above panel is positioned in front of the cushion when the cushion is expanded and deployed. Furthermore, the above panel is preferably positioned at the front end of the cushion.

This causes the panel to form a plane between the main chamber and the sub-chamber at the front or forward end of the cushion in the expanded and deployed state. Thus, the panel can reliably receive the head of the occupant when moving diagonally forward on the center side of the vehicle during a collision. For front-to-back direction positions of the panel, the front direction of the occupant seated in a normal posture in the vehicle seat shall be the front direction, and the back direction of the occupant shall be the back direction.

The main chamber above preferably has a vent hole to exhaust the gas supplied from the inflator, and the sub-chamber is preferably formed of a base fabric separate from the main chamber and has a gas inlet to introduce the gas exhausted from the vent hole through the vent hole at the connecting portion between the main chamber and the sub-chamber.

This allows gas to be introduced into the sub-chamber from the vent hole in the main chamber of the expanded and deployed cushion through the gas inlet port in the sub-chamber. In this way, the main and sub-chambers of the cushion expand and deploy. Furthermore, since the sub-chamber is a separate body from the main chamber, the base fabric that is separate from the main chamber can be easily set to an appropriate shape.

The sub-chamber above is preferably formed of a base fabric that is integral to the main chamber, and the cushion preferably further has a duct formed between the main chamber and the sub-chamber that introduces gas from the main chamber to the sub-chamber.

This allows gas to be introduced from the main chamber to the sub-chamber via the duct after the main chamber of the cushion has expanded and deployed. In this way, the sub-chamber of the cushion can function as a delay chamber that expands and deploys later than the main chamber. Therefore, the sub-chamber can expand and deploy as a delay chamber to more reliably receive and protect the head of the occupant while the occupant moves toward the center in the vehicle width direction (far side) due to inertia during a collision on the far side from the occupant.

The above sub-chamber is preferably set higher than the shoulders and lower than the head of an occupant seated in a vehicle seat.

This allows the cushion in the expanded and deployed state to more reliably receive the head of the occupant in the sub-chamber and inhibit head movement when the head of the occupant moves downward in the vehicle during a collision.

The main chamber described above preferably includes a raised part that rises upward and expands and deploys toward the side of the occupant in the vehicle seat during expansion and deployment, and a base part that is positioned below the raised part during expansion and deployment. The sub-chamber preferably expands toward the occupant from the base part and protrudes toward the vehicle seat from the occupant side of the raised part, including a supporting part that receives the head of the occupant when the head moves downward. The panel preferably connects the raised part of the main chamber to the supporting part of the sub-chamber.

In the above configuration, the main chamber includes a raised part and a base part, where the raised part rises upward and expands to the side of the occupant in the vehicle seat, and the base part expands below the raised portion. The sub-chamber expands from the base part to the occupant side, and the supporting part protrudes toward the occupant of the vehicle seat to receive the head of the occupant. In the further expanded and deployed cushion, the panel connecting the raised part of the main chamber to the supporting part of the sub-chamber is pulled away from the raised part and supporting part to form a plane between the raised part and support. This allows the panel to support the sub-chamber supporting part during cushion expansion and deployment.

Therefore, according to the above configuration, when the head of the occupant moves downward in the vehicle during a collision, not only is the head received by the supporting part of the sub-chamber, but the panel also supports the supporting part of the sub-chamber. When the head of the occupant moves toward the front of the vehicle during a collision, the panel that forms a plane receives the head of the occupant. Thus, according to the above configuration, the protection performance of the occupant can be improved.

The cushion preferably further includes other sub-chambers that expand and deploy from the base part to the opposite side of the occupant side, and the other sub-chambers may include a supporting part that projects toward the other vehicle seat adjacent to the vehicle seat from the opposite side to the occupant side surface of the raised part and which receives the head of the occupant of the other vehicle seat when the head of the other occupant moves downward.

This causes the other sub-chamber to expand and deploy from the base part to the opposite side of the occupant, and the supporting part protrudes toward the occupant of the other vehicle seat adjacent to the vehicle seat to receive the head of the other occupant. Thus, if the head of an occupant in the other vehicle seat moves downward in the vehicle during a collision, the head of the other occupant can be received by the supporting part of the other sub-chambers.

The above cushion may also include another panel that connects the raised part of the main chamber to the other supporting part in the other sub-chamber.

This causes the other panel in the expanded and deployed cushion to be pulled from the raised part of the main chamber and the other supporting part of the other sub-chamber, forming a plane between the raised part and the other supporting part. This allows the other panel to support the other supporting part in the other sub-chamber during cushion expansion and deployment.

Therefore, according to the above configuration, when the head of the occupant moves downward in the vehicle during a collision, not only is the head received by the other supporting part of the other sub-chamber, but the other panel also supports the other supporting part, suppressing downward movement of the head of the occupant. When the head of the occupant moves toward the front of the vehicle during a collision, the other panel that forms a plane receives the head of the occupant. Thus, according to the above configuration, the protection performance of the occupant can be improved.

The panels described above are preferably non-expanding panels. Thus, the non-expanding panel connects the main chamber to the sub-chamber, which reliably supports the sub-chamber and prevents the head of the occupant from moving downward. When the head of the occupant moves toward the front of the vehicle during a collision, the non-expanding panel that forms a plane will receive the head of the occupant, thereby ensuring that the head of the occupant will not move forward.

### EFFECT OF THE INVENTION

According to the present invention, it is possible to provide a side airbag device that can improve the protection performance of the occupant

### BRIEF DESCRIPTION OF THE DRAWINGS

FIG. 1 is a diagram depicting an outline of a side airbag device according to an embodiment of the present invention.
FIG. 2 is a diagram depicting the side airbag device when an occupant is seated in the vehicle seat of FIG. 1(b).
FIG. 3 is a diagram depicting the process forming the cushion in FIG. 1(b).
FIG. 4 is a diagram depicting a Modified Example of the cushion of FIG. 1(b) and the formation process thereof.
FIG. 5 is a diagram illustrating another Modified Example of the cushion of FIG. 1(b).
FIG. 6 is a diagram depicting a Modified Example of the cushion of FIG. 5.

### DESCRIPTION OF THE PREFERRED EMBODIMENTS

Preferred Embodiments according to the present invention will hereinafter be described in detail with reference to the attached drawings. Dimensions, materials, other specific numerical values, and the like indicated in the Embodiments are merely examples for ease of understanding of the invention and do not limit the present invention unless otherwise noted. Note that in the present specification and drawings, elements having essentially identical functions and configurations are labeled with identical symbols in order to omit redundant descriptions along with an illustration of elements not directly related to the present invention.

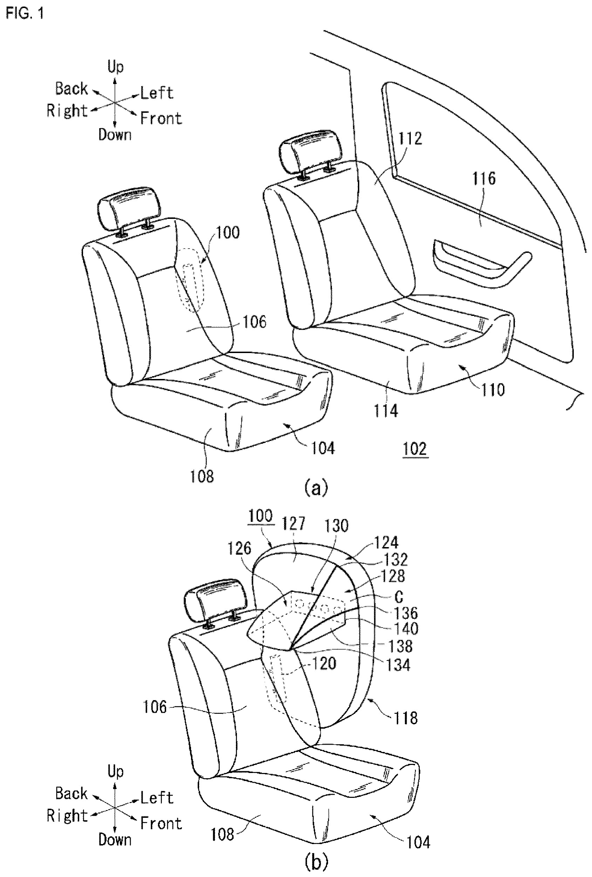

FIG. 1 is a diagram depicting an outline of a side airbag device 100 according to an embodiment of the present invention. FIG. 1(a) is a perspective view depicting a part of the inside of the vehicle 102. FIG. 1(b) is a diagram depicting a side airbag device 100 of FIG. 1(a) together with a vehicle seat 104.

Regarding the present Embodiment, when an occupant is seated in a seat in a regular posture, the direction the occupant faces is referred to as front, and the opposite direction is referred to as rear. Furthermore, when the occupant is seated in the seat in a regular posture, the right of the occupant is referred to as the right direction, and the left of the occupant is referred to as the left direction. Furthermore, when the occupant is seated in a regular posture, the direction towards the head of the occupant is referred to as up, and the direction towards the legs of the occupant is referred to as down. Furthermore, as needed, any diagrams used in descriptions below will indicate the front, rear, left, right, up, and down directions based on the occupant as described above as Front, Rear, Left, Right, Up, and Down.

As indicated by the dotted lines in FIG. 1(a), the side airbag device 100 is embedded in a side portion on a center side of the vehicle of a seat back 106 of the vehicle seat 104. The vehicle seat 104 is a right-side front seat (in other words, a driver's seat) in the vehicle 102 and has the seatback 106 as well as a seat cushion 108 on which an occupant is seated.

A vehicle seat 110 adjacent to the vehicle seat 104 is arranged in the vehicle 102. The vehicle seat 110 is a left-side front seat (in other words, a front occupant seat) and has a seatback 112 and a seat cushion 114. Furthermore, a side door 116 is positioned on an outer side of the vehicle of the vehicle seat 110.

The above side airbag device 100 may be embedded in the center side of the vehicle of the seatback 112 of the vehicle seat 110, or in the outer side of the vehicle of the seatback 112, or in other words, the side facing the side door 116.

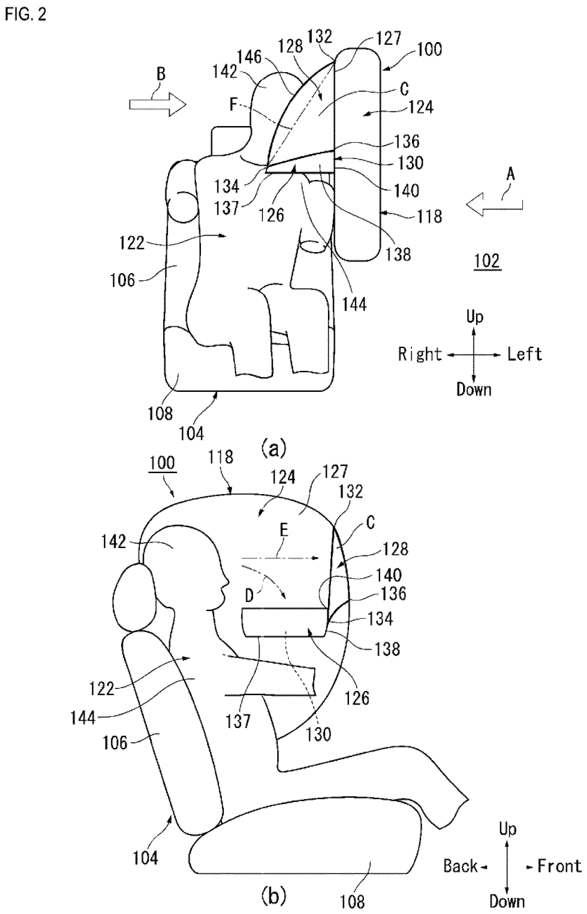

The side airbag device 100 is equipped with a bag-shaped cushion 118, as depicted in FIG. 1(b). The cushion 118 expands and deploys to the side of the occupant 122 (see FIG. 2) of the vehicle seat 104 using gas supplied from the inflator 120, which is a gas generator. The cushion 118 is formed into a bag shape, for example, by sewing the base fabric comprising the cushion surface on the front and back sides or by spinning the fabric using OPW (One-Piece Woven).

FIG. 2 is a diagram depicting the side airbag device 100 when an occupant 122 is seated in the vehicle seat 104 of FIG. 1(b). FIG. 2(a) and FIG. 2(b) depict the side airbag device 100 with the cushion 118 expanded and deployed, viewed from the front of the vehicle and from outside in the vehicle width direction, respectively.

The cushion 118 includes a main chamber 124, a sub-chamber 126, and a non-expanding panel 128, as depicted in FIG. 1(b). The main chamber 124 has the inflator 120 inserted inside and expands to the side of the occupant 122 of the vehicle seat 104 depicted in FIG. 2(a).

The sub-chamber 126 is a chamber formed of a base fabric separate from main chamber 124 and connected to the main chamber 124 via a connecting portion 130. The sub-chamber 126 is provided to protrude from the occupant side surface 127 of the main chamber 124 toward the vehicle seat 104, and the sub-chamber protrudes toward the occupant 122 of the vehicle seat 104 when the main chamber 124 is expanded and deployed, as depicted in FIG. 2(a).

The non-expanding panel 128 is a separate panel with three sides that connect the main chamber 124 to the sub-chamber 126 and is connected to the first location 132, second location 134, and third location 136. The non-expanding panel 128 is not limited to a separate panel but may be integral with the main chamber 124 or sub-chamber 126. The first location 132 is positioned in the main chamber 124 and is above the lower end part 137 of the sub-chamber 126.

As depicted in FIG. 1(b) and FIG. 2(a), the second location 134 is positioned in the sub-chamber 126, positioned more on the occupant side than the occupant side surface 127 of the main chamber 124, and positioned more on the occupant side of the front end 138 of the sub-chamber 126. The third location 136 is positioned in the main chamber 124 as depicted in FIG.s 1(b) and 2(b) and is positioned in front of or near the lower end part 137 of the sub-chamber 126 or in front of or near the front end 140 of the connecting portion 130.

In addition, FIG. 2(a) depicts the vehicle 102 receiving an impact in the lateral direction (see arrow A) from a side collision and a state of the occupant 122 moving to the center of the vehicle due to receiving impact in the lateral direction (see arrow B) towards the center of the vehicle, caused by inertia. In other words, the line of motion of the occupant 122 involved in a side collision is in the lateral direction indicated by arrows A and B (in other words, the vehicle width direction).

The side airbag device 100 receives, for example, a head 142 of the occupant 122 moving in the direction indicated by arrow B, by means of the expanded and deployed cushion 118, as depicted in FIG. 2(a).

Specifically, in the expanded and deployed cushion 118, the non-expanding panel 128 connecting the main chamber 124 and sub-chamber 126 is pulled from the first location 132 and third location 136 positioned in the main chamber 124 and the second location 134 in the sub-chamber 126. Thus, the non-expanding panel 128 can more reliably form a plane C between the main chamber 124 and the sub-chamber 126 to support the sub-chamber 126 during the expansion and deployment of the cushion 118.

As depicted in FIG. 2(b), in the cushion 118, the sub-chamber 126 is set higher than the shoulder 144 of the occupant 122 and lower than the head 142 in the expanded and deployed state.

Assume that during a side impact, the head 142 of the occupant 122 moves in the direction indicated by arrow B in FIG. 2(a), and that the head 142 also moves downward in the vehicle as indicated by arrow D in FIG. 2(b). In this case, the cushion 118 can receive the head 142 of the occupant 122 by the sub-chamber 126 protruding toward the occupant 122 of the vehicle seat 104, and the non-expanding panel 128 supports the sub-chamber 126, which further prevents the head 142 from moving downward.

Assume also that the head 142 of the occupant 122 moves in the direction indicated by arrow B in FIG. 2(a) during a side impact, and that the head 142 also moves toward the front of the vehicle as indicated by arrow E in FIG. 2(b). In this case, the cushion 118 can prevent the head 142 from moving forward by having the non-expanding panel 128, which forms the plane C, receive the head 142 of the occupant 122. Thus, according to the side airbag device 100, the protection of the occupant 122 can be improved.

Here, the cushion 118 is positioned, in the front-to-back direction in the expanded and deployed state depicted in FIG. 2(b), such that the third location 136 of the main chamber 124, or in other words a location corresponding to the front end of the main chamber 124, is more forward than the second location 134 of the sub-chamber 126, or in other words the front end 138 of the sub-chamber 126. However, if the connecting portion 130 is set farther forward in the cushion 118, or if the shape of the main chamber 124 or sub-chamber 126 is changed, the front end 138 of the sub-chamber 126 may be more forward than the third location 136 of the main chamber 124 when the cushion 118 is expanded and deployed. In such a cushion 118, the non-expanding panel 128 is positioned at the front end of the cushion 118 in the expanded and deployed state thereof, including the front end 138 of sub-chamber 126 and the third location 136, which is the front end of main chamber 124, or at a position in front of the cushion 118 containing these near the front end.

This causes the non-expanding panel 128 to form a plane C between the main chamber 124 and sub-chamber 126 at the front or front end of the cushion 118 in the expanded and deployed state. Thus, the non-expanding panel 128 can reliably receive the head 142 of the occupant 122 when the head 142 of the occupant 122 moves diagonally forward on the center side of the vehicle during a collision. The front-to-back direction position of the non-expanding panel 128 refers to the front direction of the occupant 122 seated in a normal posture in the vehicle seat 104 as the front direction, and the back direction of the occupant as the back direction.

The non-expanding panel 128 is described as triangular, but the panel can also be trapezoidal or other polygonal shape. If the non-expanding panel is polygonal, the plane C can be formed more securely by positioning the upper edge 146 of the non-expanding panel in the vicinity of the tension line F, depicted by the dotted line in FIG. 2(a), which occurs during the expansion and deployment of the cushion 118.

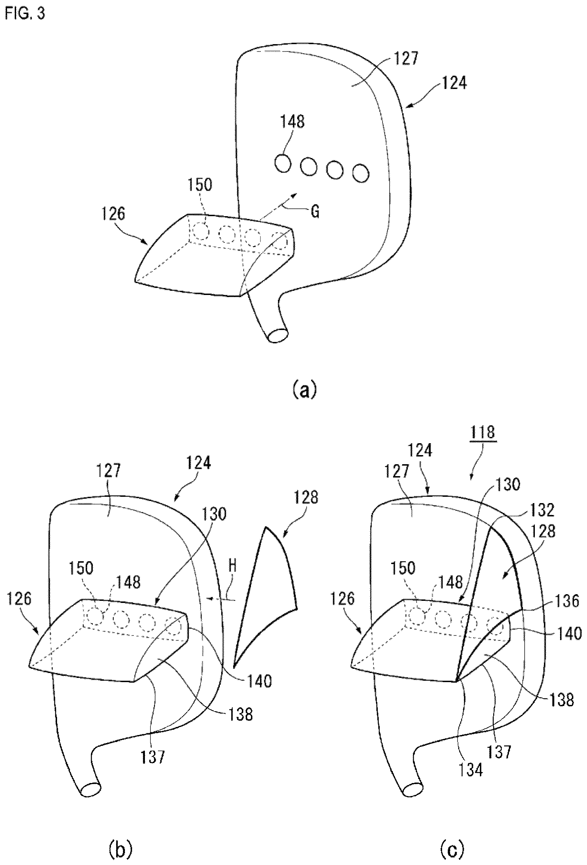

FIG. 3 is a diagram depicting the process forming the cushion 118 in FIG. 1(b). As depicted in FIG. 3(a), the main chamber 124 has multiple (here, four) vent holes 148 on the occupant side surface 127. The sub-chamber 126 is formed of a base fabric separate from the main chamber 124 and has multiple (here, four) gas inlets 150.

Then, as depicted by arrow G in FIG. 3(a), the sub-chamber 126 is brought closer to the main chamber 124, the gas inlet 150 and vent hole 148 are overlapped, and sewing is performed around the inlet and vent hole to form the connecting portion 130 depicted in FIG. 3(b).

As depicted in FIG. 3(b), at the connecting portion 130, the gas inlet 150 of the sub-chamber 126 connects to the vent hole 148 of the main chamber 124, allowing gas exhausted from the vent hole 148 to be introduced into the sub-chamber 126.

Furthermore, the non-expanding panel 128 is brought closer to the front end 138 of the sub-chamber 126, the front end 140 of the connecting portion 130, and the main chamber 124, as depicted by arrow H in FIG. 3(b). The non-expanding panel 128 is then connected to the first location 132 and third location 136 positioned in the main chamber 124 and the second location 134 positioned in the sub-chamber 126 to connect the main chamber 124 and sub-chamber 126, as depicted in FIG. 3(c). In this way, the cushion 118 depicted in FIG. 1(b) can be formed.

Gas is introduced into the sub-chamber 126 from the vent hole 148 of the main chamber 124 of the expanded and deployed cushion 118 through the gas inlet 150 of the sub-chamber 126. This allows the main chamber 124 and sub-chamber 126 to expand and deploy more reliably. Furthermore, since the sub-chamber 126 is a separate body from the main chamber 124, the base fabric that is separate from the main chamber 124 can be easily set to an appropriate shape.

The sub-chamber 126 is shaped such that the front end 138 thereof tapers to a smaller thickness moving toward the occupant side, or in other words, away from the main chamber 124. This allows the head 142 of the occupant 122 to be more reliably protected by the thicker portion when the head 142 moves toward the main chamber 124.

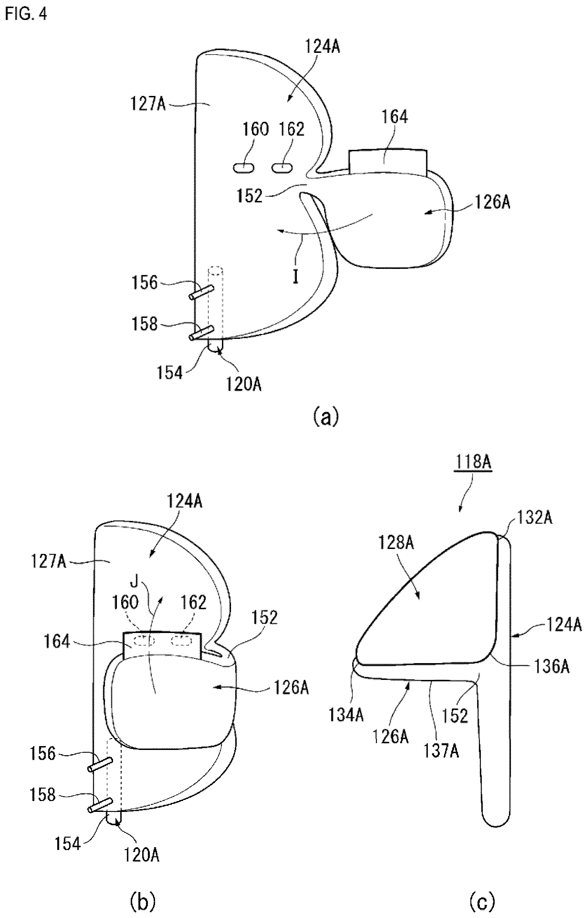

FIG. 4 depicts a variation of the cushion 118 of FIG. 1(b) and the sewing progress thereof. In the cushion 118A of the Modified Example, as depicted in FIG. 4(a), the main chamber 124A and sub-chamber 126A are formed of a single piece of base fabric.

The cushion 118A further has a duct 152. The duct 152 is formed between the main chamber 124A and sub-chamber 126A and introduces gas from the main chamber 124A to the sub-chamber 126A. A portion of the inflator 120A is inserted inside the main chamber 124A. The inflator 120A can be installed on the side of the seatback 106 of the vehicle seat 104 by means of stud bolts 156 and 158 protruding from the body 154.

The main chamber 124A also has seam parts 160 and 162. The sub-chamber 126A has a sewing margin 164. Then, as depicted by arrow I in FIG. 4(a), the sub-chamber 126A is folded over the occupant side surface 127A of the main chamber 124A, based on the position of the duct 152 formed between the main chamber 124A and the sub-chamber 126A, and the like. As a result, the sewing margin 164 formed in sub-chamber 126A overlaps the seam parts 160 and 162 of main chamber 124A, as depicted in FIG. 4(b).

Furthermore, the sub-chamber 126A is folded upward as depicted by the arrow J in FIG. 4(b) by sewing with the seam parts 160 and 162 overlapping the sewing margin 164. The non-expanding panel 128A is then connected to the first location 132A and third location 136A positioned in the main chamber 124A and the second location 134A positioned in the sub-chamber 126A to connect the main chamber 124A and sub-chamber 126A, as depicted in FIG. 4(c). In this way, the cushion 118A of the Modified Example can be formed. The first location 132A and the third location 136A are positioned above the lower end part 137A of the sub-chamber 126A. The second location 134A is positioned more toward the occupant side than the occupant side surface 127A of the main chamber 124A.

In the expanded and deployed state of the cushion 118A, gas is introduced from the main chamber 124A to the sub-chamber 126A via the duct 152 after the main chamber 124A is expanded and deployed. In this way, the cushion 118A allows the sub-chamber 126A to function as a delay chamber that expands later than the main chamber 124A during expansion and deployment.

Therefore, the sub-chamber 126A of the cushion 118A can expand and deploy as a delay chamber to more reliably receive and protect the head 142 of the occupant 122 while the occupant 122 moves toward the center in the vehicle width direction (far side) due to inertia during a collision on the far side from the occupant 122.

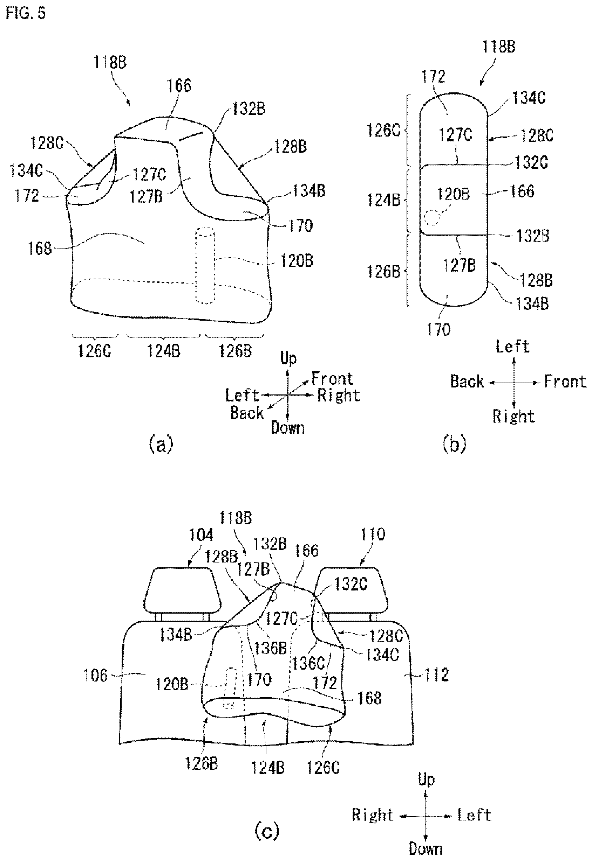

FIG. 5 is a diagram illustrating another Modified Example of the cushion 118 of FIG. 1(b). FIG. 5(a) depicts the cushion 118B of the Modified Example in an expanded and deployed state. FIG. 5(b) depicts the cushion 118B of FIG. 5(a) viewed from above. FIG. 5(c) depicts the cushion 118B attached to the center side of the vehicle on the center side of the seatback 106 of the vehicle seat 104 in an expanded and deployed state.

The cushion 118B of the Modified Example is an integral chamber that expands and deploys using gas supplied by the inflator 120B and includes the main chamber 124B and sub-chambers 126B and 126C. The main chamber 124B includes a raised part 166 and a base part 168 as depicted in FIG. 5(a). The raised part 166 rises upward during expansion and deployment and expands to the side of the occupant 122. The base part 168 expands and deploys below the raised part 166.

The sub-chamber 126B expands and deploys from the base part 168 toward the occupant side and includes the supporting part 170. As depicted in FIGS. 5(b) and 5(c), the supporting part 170 protrudes toward the vehicle seat 104 from the occupant side surface 127B of the raised part 166 and is set in a position to receive the head 142 of the occupant 122 (see FIG. 2) when the head 142 moves downward.

The other sub-chamber 126C expands from the base part 168 to the opposite side of the occupant side and includes a supporting part 172. The supporting part 172 protrudes toward the other vehicle seat 110 adjacent to the vehicle seat 104 more than the opposite side to the occupant side surface 127C of the raised part 166 (see FIG. 5(c)) and is set in a position to receive the head of the occupant of the other vehicle seat 110 when the head moves downward.

The cushion 118B further includes non-expanding panels 128B and 128C. The non-expanding panel 128B is connected to the first location 132B and third location 136B positioned at the raised part 166 depicted in FIG. 5(c) and the second location 134B positioned at the supporting part 170, connecting the raised part 166 of the main chamber 124B and the supporting part 170 of the sub-chamber 126B. The first location 132B is positioned above the supporting part 170 of the sub-chamber 126B. The second location 134B is positioned more on the occupant side of the raised part 166 than the occupant side surface 127B. The third location 136B is positioned at the same height as the supporting part 170 of the sub-chamber 126B but may be positioned above the supporting part 170.

The non-expanding panel 128C is connected to the first location 132C and third location 136C positioned at the raised part 166 depicted in FIG. 5(c) and the second location 134C positioned at the supporting part 172, connecting the raised part 166 of the main chamber 124B and the supporting part 172 of the sub-chamber 126C. The first location 132C is positioned above the supporting part 172 of the sub-chamber 126C. The second location 134C is positioned more on the other vehicle seat 110 side than the opposite side to the occupant side surface 127C of the raised part 166. The third location 136C is positioned at the same height as the supporting part 172 of the sub-chamber 126C but may be positioned above the supporting part 172. In this way, the cushion 118B of the Modified Example can be formed.

According to the cushion 118B, if the head 142 of the occupant 122 moves downward in the vehicle during a collision, the supporting part 170 of the sub-chamber 126B can protrude toward the occupant 122 of the vehicle seat 104 and receive the head 142. In addition, the non-expanding panel 128B is pulled away from the raised part 166 and supporting part 170 to form a plane between the raised part 166 and supporting part 170. Therefore, in the cushion 118B, the non-expanding panel 128B can support the supporting part 170, which prevents the head 142 from moving downward.

Furthermore, with the cushion 118B, if the head 142 of the occupant 122 moves in the vehicle forward direction, the non-expanding panel 128B, which forms a plane, will receive the head 142, thus controlling movement of the head 142.

Furthermore, according to the cushion 118B, if the head of an occupant seated in the other vehicle seat 110 moves downward in the vehicle during a collision, the supporting part 172 of sub-chamber 126C can protrude toward the occupant of vehicle seat 110 to receive the head. In addition, the non-expanding panel 128C is pulled away from the raised part 166 and supporting part 172 to form a plane between the raised part 166 and supporting part 172. Therefore, in the cushion 118B, the non-expanding panel 128C can support the supporting part 172, which prevents the head from moving downward.

In the cushion 118B, when the head of the occupant of vehicle seat 110 moves toward the front of the vehicle, the non-expanding panel 128C, which forms a plane, receives the head and prevents it from moving forward. Thus, according to the cushion 118B, the protection performance of the occupant can be improved.

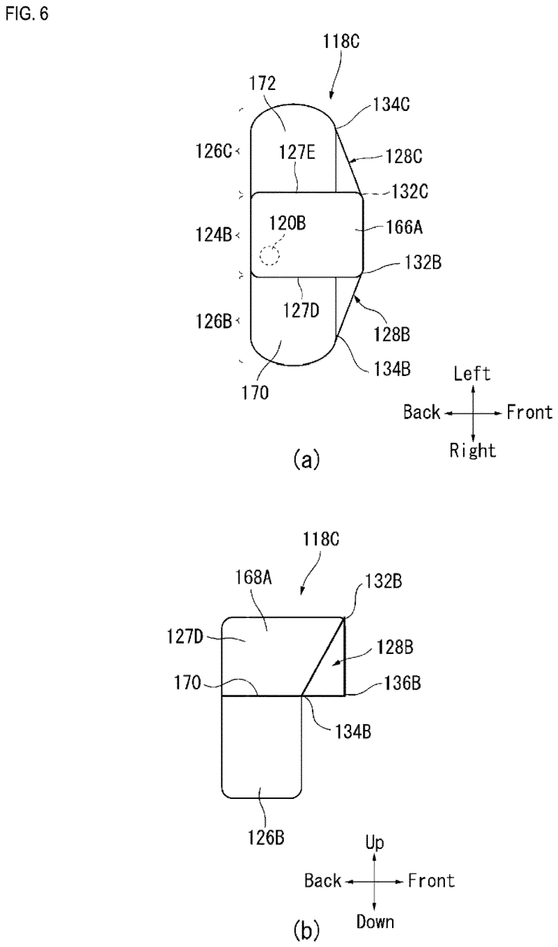

FIG. 6 is a diagram illustrating a Modified Example of the cushion 118B in FIG. 5. FIGS.6(a) and 6(b) depict the expanded and deployed cushion 118C of the Modified Example viewed from above and from the side, respectively. The cushion 118C differs from the cushion 118B above in that the raised part 166A of the main chamber 124B is raised upward and forward during expansion and deployment.

In such a cushion 118C, the raised part 166A protrudes forward, as depicted in FIG, 6(a) and FIG. 6(b). For this reason, the occupant side surface 127D and the opposite side to the occupant side surface 127E of the raised part 166A depicted in FIG. 6(a) are longer than the occupant side surface 127B and the opposite side to the occupant side surface 127C of the raised portion 166 of the cushion 118B depicted in FIG. 5(b), in the front-back direction of the vehicle.

Therefore, the cushion 118C not only receives the head of the occupant with the supporting parts 170 and 172 of sub-chambers 126B and 126C and panels 128B and 128C, but also with the surfaces 127D and 127E of the raised part 166A. Thus, according to cushion 118C, the protection performance of the occupant can be improved.

With the cushions 118B and 118C, the panels 128B and 128C are used to connect raised parts 166 and 166A of main chamber 124B to supporting parts 170 and 172 of the sub-chambers 126B and 126C, respectively, but are not limited to this, the panel 128C may not be provided for only the panel 128B to be provided.

The panels 128, 128A, 128B, and 128C are all non-expanding panels, but are not limited to this, as long as it is possible to connect main chambers 124, 124A, 124B and sub-chambers 126, 126A, 126B, 126C during expansion and deployment.

Preferred Embodiments of the present invention were described with reference to the appended drawings, but it goes without saying that the present invention is not limited to such examples. It is clear that a person of ordinary skill in the art could conceive various modifications or revisions within the scope set forth by the claims, and it would be understood that these modifications or revisions would belong to the technical scope of the present invention.

Moreover, the example in which the side airbag device 100 according to the present invention is applied to automobiles has been described in the abovementioned embodiments. However, in addition to automobiles, the present invention can be applied to aircrafts, ships, and the like, with the same operations and effects capable of being exerted.

### INDUSTRIAL APPLICABILITY

The present invention can be applied to a side airbag device provided with a bag-shaped cushion that expands and deploys to a side of the occupant in a vehicle seat in the event of a vehicle side impact or the like.

### EXPLANATION OF CODES

100. Side airbag device; 102. Vehicle; 104, 110. Vehicle seat; 106, 112. Seatback; 108, 114. Seat cushion; 116. Side door; 118, 118A, 118B, 118C. Cushion; 120, 120A. Inflator; 122. Occupant; 124, 124A, 124B. Main chamber; 126, 126A, 126B, 126C. Sub-chamber; 127, 127A. Main chamber occupant side surface; 127B, 127D. Occupant side surface of the raised part; 127C, 127E. Opposite side to the occupant side surface of the raised part; 128, 128A, 128B, 128C. Non-expanding panel; 130. Connecting portion; 132, 132A, 132B, 132C. First location; 134, 134A, 134B, 134C. Second location; 136, 136A, 136B, 136C. Third location; 137, 137A. Sub-chamber lower end part; 138. Sub-chamber front end; 140. Connecting portion front end; 142. Head of occupant; 144. Shoulder of occupant; 146. Non-expanding panel upper edge; 148. Vent hole; 150. Gas inlet; 152. Duct; 154. Inflator main body; 156, 158. Stud bolt; 160, 162. Seam part; 164. Sewing margin; 166, 166A. Raised part; 168. Base part; 170, 172. Supporting part.

## Claims

1. A vehicle seat (104) comprising a side airbag device (100), comprising:
an inflator (120,120A); and
a cushion (118, 118A, 1188, 118c) in a bag shape, provided to a side of a vehicle seat (104,110) seatback (106,112), that uses gas supplied from the inflator (120,120A) to expand and deploy to a side of an occupant in the vehicle seat (104,110), wherein the cushion (118,118A,118B,118C) includes:
a main chamber (124,124A,124B) into which the inflator (120,120A) is inserted, and which expands and deploys to the side of the occupant in the vehicle seat (104,110);
a sub-chamber (126,126A,126B,126C) provided to protrude from the passenger side surface of the main chamber (124,124A,124B) toward the vehicle seat (104,110), and protrudes toward the occupant in the vehicle seat (104,110) during expansion and deployment of the main chamber (124,124A,124B) to receive the head of the occupant (142); and
a panel (128, 128A, 128B, 128C) connecting the main chamber (124,124A,124B) and the sub-chamber (126,126A,126B,126C),
wherein
the panel (128, 128A, 128B, 128C) is connected to the main chamber (124,124A,124B) at least above the lower end part (137,137A) of the sub-chamber (126,126A,126B,126C) and connected to the sub-chamber (126,126A,126B,126C) more to the occupant side than the occupant side surface of the main chamber (124,124A,124B). **characterized in that** the panel (128, 128A, 128b, 128C) is a panel (128, 128A, 128B, 128C) having at least three sides, connected at a first location (132) to the main chamber (124,124A,124B) at a position above the lower end part (137,137A) of the sub-chamber (126,126A,126B,126C), at a second location (134) to the front end (138) of the sub-chamber (126,126A,126B,126C) positioned on the occupant side, and at a third location (136) to the main chamber (124,124A,124B) on the front of the lower end part (137,137A) of the sub-chamber (126,126A,126B,126C) or periphery thereof,
wherein the panel (128, 128A, 128B, 128C) is positioned in front of the cushion (118,118A,118B,118C)
when the cushion (118,118A,1188,118c) is expanded and deployed.

2. The vehicle seat (104) according to claim 1, wherein the panel (128, 128A, 128B,128C) is positioned on the front end of the cushion (118,118A,118B,118C).

3. The vehicle seat (104) according to any one of claims 1 or 2, wherein:
the main chamber (124,124A,124B) has a vent hole (148) through which gas supplied from the inflator (120,120A) is exhausted; and
the sub-chamber (126,126A,126B,126C) is formed of a base fabric separate from the main chamber (124,124A,124B), with a gas inlet (150) connected to the vent hole (148) at the connecting portion (130) between the main chamber (124,124A,124B) and sub-chamber (126,126A,126B,126C) to introduce gas exhausted from the vent hole (148).

4. The vehicle seat (104) according to any one of claims 1 to 3, wherein:
the sub-chamber (126,126A,126B,126C) is formed of a base fabric that is integral with the main chamber (124,124A,124B); and
cushion (118,118A,118B,118C) is further formed between the main chamber (124,124A,124B) and sub-chamber (126,126A,126B,126C), with a duct (152) that introduces gas from the main chamber (124,124A,124B) to the sub-chamber (126,126A,126B,126C).

5. The vehicle seat (104) according to any one of claims 1 to 4, wherein the sub-chamber (126,126A,126B,126C) is set higher than the shoulder of the occupant (144) seated in the vehicle seat (104,110) and lower than the head (142) of the same.

6. The vehicle seat (104) according to claim 1, wherein the main chamber (124,124A,124B) includes:
a raised part (166,166A) that rises upward during expansion and deployment and expands and deploys toward the side of the occupant in the vehicle seat (104,110) and a base part (168) positioned below the raised part (166,166A) during expansion and deployment;
the sub-chamber (126,126A,126B,126C) includes a supporting part that expands and deploys to the occupant side from the base part (168), protrudes toward the vehicle seat (104,110) more than the occupant side surface of the raised part (127B,127D), and receives the head of the occupant (142) when the head moves downward;
and
the panel connects the raised part (166,166A) of the main chamber (124,124A,124B) and the supporting part of the sub-chamber (126,126A,126B,126C).

7. The vehicle seat (104) according to claim 6, wherein the cushion further includes:
another sub-chamber (126,126A,126B,126C) that expands and deploys from the base part (168) to the opposite side of the occupant, wherein
the other sub-chamber (126,126A,126B,126C) protrudes more to another vehicle seat (104,110) adjacent to the vehicle seat (104,110) than the opposite side does to the occupant side surface of the raised part (127B,127D), including another supporting part that receives the head of an occupant (142) in the other vehicle seat (104,110) when the head of the other occupant moves downward

8. The vehicle seat (104) according to claim 7, wherein the cushion (118,118A,118B,118C) further includes another panel connecting the raised part (166,166A) of the main chamber (124,124A,124B) to the other supporting part of the other sub-chamber (126,126A,126B,126C).

9. The vehicle seat (104) according to any one of claims 1 to 8, wherein the panel is a non-expanding panel (128,128A,128B,128C).

## Patentansprüche

1. Fahrzeugsitz (104), umfassend eine Seitenairbagvorrichtung (100), umfassend:
einen Gasgenerator (120, 120A); und
ein Kissen (118, 118A, 118B, 118C) in einer Beutelform, das einer Seite einer Sitzlehne (106, 112) eines Fahrzeugsitzes (104, 110) bereitgestellt wird, das Gas verwendet, das von dem Gasgenerator (120, 120A) zugeführt wird, um sich zu einer Seite eines Insassen in dem Fahrzeugsitz (104, 110) zu expandieren und zu entfalten, wobei das Kissen (118, 118A, 118B, 118C) einschließt:
eine Hauptkammer (124, 124A, 124B), in die der Gasgenerator (120, 120A) eingesetzt ist und die sich zu der Seite des Insassen in dem Fahrzeugsitz (104, 110) expandiert und entfaltet;
eine Teilkammer (126, 126A, 126B, 126C), die bereitgestellt ist, um von der passagierseitigen Oberfläche der Hauptkammer (124, 124A, 124B) in Richtung des Fahrzeugsitzes (104, 110) hervorzustehen, und während der Expansion und Entfaltung der Hauptkammer (124, 124A, 124B) in Richtung des Insassen in dem Fahrzeugsitz (104, 110) hervorsteht, um den Kopf des Insassen (142) aufzunehmen; und
eine Bahn (128, 128A, 128B, 128C), die die Hauptkammer (124, 124A, 124B) und die Teilkammer (126, 126A, 126B, 126C) verbindet, wobei die Bahn (128, 128A, 128B, 128C) mindestens oberhalb des unteren Endteils (137, 137A) der Teilkammer (126, 126A, 126B, 126C) mit der Hauptkammer (124, 124A, 124B) verbunden ist und mit der Teilkammer (126, 126A, 126B, 126C) mehr an der Insassenseite als die insassenseitige Oberfläche der Hauptkammer (124, 124A, 124B) verbunden ist, **dadurch gekennzeichnet, dass** die Bahn (128, 128A, 128b, 128C) eine Bahn (128, 128A, 128B, 128C) ist, die mindestens drei Seiten aufweist, die an einer ersten Stelle (132) mit der Hauptkammer (124, 124A, 124B) an einer Position oberhalb des unteren Endteils (137, 137A) der Teilkammer (126, 126A, 126B, 126C), an einer zweiten Stelle (134) mit dem vorderen Ende (138) der Teilkammer (126, 126A, 126B, 126C), die auf der Insassenseite positioniert ist, und an einer dritten Stelle (136) mit der Hauptkammer (124, 124A, 124B) an der Vorderseite des unteren Endteils (137, 137A) der Teilkammer (126, 126A, 126B, 126C) oder einem Umfang davon verbunden ist, wobei die Bahn (128, 128A, 128B, 128C) vor dem Kissen (118, 118A, 118B, 118C) positioniert ist, wenn das Kissen (118, 118A, 118B, 118C) expandiert und entfaltet wird.

2. Fahrzeugsitz (104) nach Anspruch 1, wobei die Bahn (128, 128A, 128B, 128C) an dem vorderen Ende des Kissens (118, 118A, 118B, 118C) positioniert ist.

3. Fahrzeugsitz (104) nach einem der Ansprüche 1 oder 2, wobei:
die Hauptkammer (124, 124A, 124B) ein Entlüftungsloch (148) aufweist, durch das Gas abgeführt wird, das von dem Gasgenerator (120, 120A) zugeführt wird; und
die Teilkammer (126, 126A, 126B, 126C) aus einem Basisgewebe ausgebildet ist, das von der Hauptkammer (124, 124A, 124B) getrennt ist, mit einem Gaseinlass (150), der mit dem Entlüftungsloch (148) an dem Verbindungsabschnitt (130) zwischen der Hauptkammer (124, 124A, 124B) und der Teilkammer (126, 126A, 126B, 126C) verbunden ist, um Gas einzuführen, das aus dem Entlüftungsloch (148) abgeführt wird.

4. Fahrzeugsitz (104) nach einem der Ansprüche 1 bis 3, wobei:
die Teilkammer (126, 126A, 126B, 126C) aus einem Basisgewebe ausgebildet ist, das mit der Hauptkammer (124, 124A, 124B) einstückig ist; und
ein Kissen (118, 118A, 118B, 118C) ferner zwischen der Hauptkammer (124, 124A, 124B) und der Teilkammer (126, 126A, 126B, 126C) mit einem Kanal (152) ausgebildet ist, der Gas aus der Hauptkammer (124, 124A, 124B) in die Teilkammer (126, 126A, 126B, 126C) einführt.

5. Fahrzeugsitz (104) nach einem der Ansprüche 1 bis 4, wobei die Teilkammer (126, 126A, 126B, 126C) höher als die Schulter des Insassen (144), der in dem Fahrzeugsitz (104, 110) sitzt, und niedriger als der Kopf (142) desselben angeordnet ist.

6. Fahrzeugsitz (104) nach Anspruch 1, wobei die Hauptkammer (124, 124A, 124B) einschließt:
einen erhöhten Teil (166, 166A), der sich während einer Expansion und Entfaltung nach oben erhebt und sich zu der Seite des Insassen in dem Fahrzeugsitz (104, 110) expandiert und entfaltet, und einen Basisteil (168), der während der Expansion und Entfaltung unterhalb des erhöhten Teils (166, 166A) positioniert ist;
die Teilkammer (126, 126A, 126B, 126C) einen Stützteil einschließt, der sich von dem Basisteil (168) zu der Insassenseite expandiert und entfaltet, mehr in Richtung des Fahrzeugsitzes (104, 110) hervorsteht als die insassenseitige Oberfläche des erhöhten Teils (127B, 127D), und den Kopf des Insassen (142) aufnimmt, wenn sich der Kopf nach unten bewegt;
und
die Bahn den erhöhten Teil (166, 166A) der Hauptkammer (124, 124A, 124B) und den Stützteil der Teilkammer (126, 126A, 126B, 126C) verbindet.

7. Fahrzeugsitz (104) nach Anspruch 6, wobei das Kissen ferner einschließt:
eine andere Teilkammer (126, 126A, 126B, 126C), die sich von dem Basisteil (168) zu der gegenüberliegenden Seite des Insassen expandiert und entfaltet, wobei
die andere Teilkammer (126, 126A, 126B, 126C) mehr zu einem anderen Fahrzeugsitz (104, 110) neben dem Fahrzeugsitz (104, 110) hervorsteht als die gegenüberliegende Seite zu der insassenseitigen Oberfläche des erhöhten Teils (127B, 127D), einschließlich eines anderen Stützteils, der den Kopf eines Insassen (142) in dem anderen Fahrzeugsitz (104, 110) aufnimmt, wenn sich der Kopf des anderen Insassen nach unten bewegt

8. Fahrzeugsitz (104) nach Anspruch 7, wobei das Kissen (118, 118A, 118B, 118C) ferner eine andere Bahn einschließt, die den erhöhten Teil (166, 166A) der Hauptkammer (124, 124A, 124B) mit dem anderen Stützteil der anderen Teilkammer (126, 126A, 126B, 126C) verbindet.

9. Fahrzeugsitz (104) nach einem der Ansprüche 1 bis 8, wobei die Bahn eine nicht expandierende Bahn (128, 128A, 128B, 128C) ist.

## Revendications

1. Siège de véhicule (104) comprenant un dispositif de sac gonflable latéral (100), comprenant :
un générateur de gaz (120, 120A) ; et
un coussin (118, 118A, 118B, 118C) en forme de sac, situé sur un côté d'un dossier (106, 112) de siège de véhicule (104, 110), qui utilise le gaz fourni par le générateur de gaz (120, 120A) pour s'étendre et se déployer vers un côté d'un occupant du siège de véhicule (104, 110), dans lequel le coussin (118, 118A, 118B, 118C) comporte :
une chambre principale (124, 124A, 124B) dans laquelle le générateur de gaz (120, 120A) est inséré, et qui s'étend et se déploie vers le côté de l'occupant du siège de véhicule (104, 110) ;
une sous-chambre (126, 126A, 126B, 126C) prévue pour faire saillie à partir de la surface côté passager de la chambre principale (124, 124A, 124B) vers le siège de véhicule (104, 110), et qui fait saillie vers l'occupant du siège de véhicule (104, 110) pendant l'extension et le déploiement de la chambre principale (124, 124A, 124B) pour recevoir la tête de l'occupant (142) ; et
un panneau (128, 128A, 128B, 128C) reliant la chambre principale (124, 124A, 124B) et la sous-chambre (126, 126A, 126B, 126C), dans lequel le panneau (128, 128A, 128B, 128C) est relié à la chambre principale (124, 124A, 124B) au moins au-dessus de la partie d'extrémité inférieure (137, 137A) de la sous-chambre (126, 126A, 126B, 126C) et relié à la sous-chambre (126, 126A, 126B, 126C) plus du côté occupant que de la surface côté occupant de la chambre principale (124,124A,124B), **caractérisé en ce que** le panneau (128, 128A, 128B, 128C) est un panneau (128, 128A, 128B, 128C) possédant au moins trois côtés, reliés au niveau d'un premier emplacement(132) à la chambre principale (124,124A, 124B) à une position située au-dessus de la partie d'extrémité inférieure (137,137A) de la sous-chambre (126,126A, 126B, 126C), au niveau d'un deuxième emplacement (134) à l'extrémité avant (138) de la sous-chambre (126,126A, 126B, 126C) positionnée du côté occupant, et au niveau d'un troisième emplacement (136) à la chambre principale (124,124A, 124B) à l'avant de la partie d'extrémité inférieure (137,137A) de la sous-chambre (126,126A, 126B, 126C) ou à la périphérie de celle-ci, dans lequel le panneau (128, 128A, 128B, 128C) est positionné devant le coussin (118, 118A, 118B, 118C) lorsque le coussin (118, 118A, 118B, 118C) est étendu et déployé.

2. Siège de véhicule (104) selon la revendication 1, dans lequel le panneau (128, 128A, 128B, 128C) est positionné sur l'extrémité avant du coussin (118, 118A, 118B, 118C).

3. Siège de véhicule (104) selon l'une quelconque des revendications 1 ou 2, dans lequel :
la chambre principale (124, 124A, 124B) possède un évent (148) par lequel le gaz fourni par le générateur de gaz (120, 120A) est évacué ; et
la sous-chambre (126, 126A, 126B, 126C) est formée d'un tissu de base séparé de la chambre principale (124, 124A, 124B), avec une entrée de gaz (150) reliée à l'évent (148) au niveau de la partie de liaison (130) entre la chambre principale (124, 124A, 124B) et la sous-chambre (126, 126A, 126B, 126C) pour introduire le gaz évacué par l'évent (148).

4. Siège de véhicule (104) selon l'une quelconque des revendications 1 à 3, dans lequel :
la sous-chambre (126, 126A, 126B, 126C) est formée d'un tissu de base qui fait partie intégrante de la chambre principale (124, 124A, 124B) ; et
un coussin (118, 118A, 118B, 118C) est également formé entre la chambre principale (124, 124A, 124B) et la sous-chambre (126, 126A, 126B, 126C), avec un conduit (152) qui introduit le gaz à partir de la chambre principale (124, 124A, 124B) dans la sous-chambre (126, 126A, 126B, 126C).

5. Siège de véhicule (104) selon l'une quelconque des revendications 1 à 4, dans lequel la sous-chambre (126, 126A, 126B, 126C) est située plus haut que l'épaule de l'occupant (144) assis dans le siège de véhicule (104, 110) et plus bas que la tête (142) de ce dernier.

6. Siège de véhicule (104) selon la revendication 1, dans lequel la chambre principale (124, 124A, 124B) comporte :
une partie surélevée (166, 166A) qui s'élève pendant l'extension et le déploiement et qui s'étend et se déploie vers le côté de l'occupant du siège de véhicule (104, 110) et une partie de base (168) positionnée sous la partie surélevée (166, 166A) pendant l'extension et le déploiement ;
la sous-chambre (126, 126A, 126B, 126C) comporte une partie de support qui s'étend et se déploie vers le côté occupant à partir de la partie de base (168), fait saillie vers le siège de véhicule (104, 110) plus que la surface côté occupant de la partie surélevée (127B, 127D), et reçoit la tête de l'occupant (142) lorsque la tête se déplace vers le bas ;
et le panneau relie la partie surélevée (166, 166A) de la chambre principale (124, 124A, 124B) et la partie de support de la sous-chambre (126, 126A, 126B, 126C).

7. Siège de véhicule (104) selon la revendication 6, dans lequel le coussin comporte en outre :
une autre sous-chambre (126, 126A, 126B, 126C) qui s'étend et se déploie à partir de la partie de base (168) vers le côté opposé de l'occupant, dans lequel
l'autre sous-chambre (126, 126A, 126B, 126C) fait davantage saillie vers un autre siège de véhicule (104, 110) adjacent au siège de véhicule (104, 110) que ne le fait le côté opposé vers la surface côté occupant de la partie surélevée (127B, 127D), y compris une autre partie de support qui reçoit la tête d'un occupant (142) dans l'autre siège de véhicule (104, 110) lorsque la tête de l'autre occupant se déplace vers le bas

8. Siège de véhicule (104) selon la revendication 7, dans lequel le coussin (118, 118A, 118B, 118C) comporte en outre un autre panneau reliant la partie surélevée (166, 166A) de la chambre principale (124, 124A, 124B) à l'autre partie de support de l'autre sous-chambre (126, 126A, 126B, 126C).

9. Siège de véhicule (104) selon l'une quelconque des revendications 1 à 8, dans lequel le panneau est un panneau non extensible (128, 128A, 128B, 128C).
